# EUROPÄISCHE PATENTSCHRIFT

(11) **EP 3 642 265 B1**
(45) Veröffentlichungstag und Bekanntmachung des Hinweises auf die Patenterteilung: **27.08.2025**
(21) Anmeldenummer: 18732081.7
(22) Anmeldetag: 21.06.2018
(51) Int. Cl.: C08K 3/013, C08K 3/02, C08K 3/32, C08K 7/02, C08K 7/14, C08K 7/16, C08K 9/08, C08J 5/04, C08J 5/10, C08J 5/18

(54) **POLYAMIDE MIT PHOSPHOR UND AL-PHOSPHONATEN**
POLYAMIDES WITH RED PHOSPHORUS AND PHOSPHONATE ALUMINUM SALTS
POLYAMIDE COMPRENANT DU PHOSPHORE ROUGE SELS D'ALMINIUM DE PHOSPHONATES

(30) Priorität: 22.06.2017 EP 17177360
(43) Veröffentlichungstag der Anmeldung: 29.04.2020
(73) Patentinhaber: BASF SE, 67056 Ludwigshafen am Rhein (DE)
(72) Erfinder: ROTH, Michael, 67056 Ludwigshafen (DE); HEUSSLER, Michaela, 67056 Ludwigshafen (DE); USKE, Klaus, 67056 Ludwigshafen (DE); MINGES, Christoph, 67056 Ludwigshafen (DE)
(74) Vertreter: BASF IP Association
(86) Internationale Anmeldenummer: PCT/EP2018/066535
(87) Internationale Veröffentlichungsnummer: WO 2018/234429

(56) Entgegenhaltungen:
- EP-A1- 3 034 553
- WO-A1-2013/083247
- WO-A1-2014/135256
- WO-A1-2014/170148

## Beschreibung

Die Erfindung betrifft thermoplastische Formmassen, enthaltend
A) 10 bis 98,5 Gew.-% eines thermoplastischen Polyamides,
B) 1 bis 20 Gew.-% roter Phosphor,
C) 0,5 bis 15 Gew.-% eines Aluminiumsalzes der Phosphonsäure,
D) 0 bis 55 Gew.-% eines faser- oder teilchenförmigen Füllstoffes oder deren Mischungen,
E) 0 bis 30 Gew.-% weiterer Zusatzstoffe,
wobei die Summe der Gewichtsprozente A) bis E) 100 % ergibt.

Außerdem betrifft die vorliegende Erfindung flammgeschützte Formmassen aus diesen Polyamidmischungen und die Verwendung derartiger Formmassen zur Herstellung von Fasern, Folien und Formkörpern und die hierbei erhältlichen Formkörper, Fasern und Folien jeglicher Art.

Roter Phosphor ist als äußerst wirksames Flammschutzmittel speziell für glasfaserverstärkte Polyamide und eine Reihe weiterer Kunststoffe seit langer Zeit bekannt. Für eine Vielzahl von Anwendungen ist es jedoch notwendig, Kunststoff-Formmassen nicht nur eine hohe Flammwidrigkeit zu verleihen. Vielmehr erlangt gerade bei anspruchsvollen Anwendungen im Elektro- und Elektronikbereich die Abstimmung von Materialeigenschaften hin zu einem ausgewogenen Produktprofil bestehend aus hohen Flammwidrigkeiten bei gleichzeitig sehr guten mechanischen und Glühdrahtbeständigkeil einen immer höheren Stellenwert.

Gerade bei dünnwandig ausgelegten Bauteilen, die z. B. mit stark beanspruchten Schnappverbindungen ausgestattet sind. kommt es darauf an, dass die eingesetzten Materialien insbesondere über gute Dehnungswerte, aber auch über eine hohe Belastbarkeit bezüglich ihrer Zähigkeit verfügen.

Halogenfrei flammgeschützte, glasfaserverstärkte Polyamid-Compounds besitzen im Vergleich zu ähnlichen Zusammensetzungen ohne Flammschutz generell reduzierte mechanische Eigenschaften, insbesondere bei der Bruchdehnung und Schlagzähigkeit. Der Zusatz von Schlagzähmodifiern auf Basis von Olefin-(co)Polymeren führt jedoch in vielen Fällen zu stark reduzierten Flammschutzeigenschaften, insbesondere unzureichende Glühdrahtbeständigkeit.

Aus der WO 2013/083247 sind Flammschutzmittel auf Basis von Phosphiten bekannt, welche in Kombination mit Dialkylphosphinsäuren allgemein für Thermoplaste einsetzbar sind.

Die Mechanik und der Glühdrahttest sind jedoch verbesserungswürdig.

WO 2014/135256 A1, EP 3 034 553 A1, WO 2013/083247 A1 und WO 2014/170148 A1 offenbaren spezielle flammgeschützte Polymere.

Der vorliegenden Erfindung lag daher die Aufgabe zugrunde, halogenfreie flammgeschützte thermoplastische Formmassen zur Verfügung zu stellen, welche durch Zusatz von Al-phosphiten unterschiedlicher Zusammensetzung zu rotem Phosphor einen wirksamen Flammschutz - insbesondere Glühdrahtbeständigkeit- und bessere mechanische Eigenschaften erzielen.

Demgemäß wurden die eingangs definierten Formmassen gefunden. Bevorzugte Ausführungsformen können den Unteransprüchen entnommen werden.

Als Komponente A) enthalten die erfindungsgemäßen Formmassen 10 bis 98,5 vorzugsweise 20 bis 97,5 und insbesondere 30 bis 80 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht Mw (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®}C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

- PA 6: ε-Caprolactam
- PA 7: Önantholactam
- PA 8: Capryllactam
- PA 9: 9-Aminopelargonsäure
- PA 11: 11-Aminoundecansäure
- PA 12: Laurinlactam
- AA/BB-Polymere:
- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-Nonandiamin, Terephthalsäure
- PA MXD6: m-Xylylendiamin, Adipinsäure
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Dodecandisäure
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

- PA410: 1,4-Tetramethylendiamin, Sebacinsäure
- PA510: 1,5-Pentamethylendiamin, Sebacinsäure
- PA10T: 1,10-Decandiamin, Terephthalsäure

Als Komponente B) enthalten die erfindungsgemäßen Formmassen 1 bis 50, insbesondere 1 bis 20, vorzugsweise 1 bis 10 und insbesondere 2 bis 8 Gew.-% roten Phosphor. Bevorzugtes halogenfreies Flammschutzmittel B) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure (insbesondere Dioctylphthalat, s. EP 176 836) oder Adipinsäure oder mit polymeren oder oligomeren Verbindungen, z.B. mit Phenolharzen oder Aminoplasten sowie Polyurethanen beschichtet ist (s. EP-A 384 232, DE-A 196 48 503). Derartige sogenannte Phlegmatisierungsmittel sind in der Regel in Mengen von 0,05 bis 5 Gew.-%, bezogen auf 100 Gew.-% B) enthalten.

Außerdem sind Konzentrate von rotem Phosphor, z.B. in einem Polyamid A) oder Elastomeren E) als Flammschutzmittel geeignet. Insbesondere eignen sich Polyolefinhomo- und -copolymere als Konzentratpolymere. Jedoch sollte der Anteil des Konzentratpolymeren -falls kein Polyamid als Thermoplast eingesetzt wird- nicht mehr als 35 Gew.-% bezogen auf das Gewicht der Komponenten A) bis E) in den erfindungsgemäßen Formmassen betragen.

### Bevorzugte Konzentratzusammensetzungen sind

30 bis 90 Gew.-%, vorzugsweise von 45 bis 70 Gew.-% eines Polyamids A) oder Elastomeren (E),
10 bis 70 Gew.-%, vorzugsweise von 30 bis 55 Gew.-% roter Phosphor (B).

Das eingesetzte Polyamid für den Batch kann verschieden von A) sein oder bevorzugt gleich A) sein, damit Unverträglichkeiten oder Schmelzpunktdifferenzen keine negative Auswirkung auf die Formmasse aufweisen.

Die mittlere Teilchengröße (d₅₀) der in den Formmassen verteilten Phosphorpartikel liegt bevorzugt im Bereich von 0,0001 bis 0,5 mm; insbesondere von 0,001 bis 0,2 mm.

Als Komponente C) enthalten die erfindungsgemäßen Formmassen 0,5 bis 15, vorzugsweise 0,5 bis 13 und insbesondere 1 bis 10 Gew.-% mindestens eines Aluminiumsalzes einer Phosphonsäure.

Unter Phosphonsäure wird dabei die Verbindung mit der Summenformel H3PO3 [CAS-Nr. 13598-36-2] verstanden. Die Salze der Phosphonsäure werden Phosphonate genannt. Die Phosphonsäure kann in zwei tautomeren Formen vorliegen, von denen die dreibindige Form ein freies Elektronenpaar am Phosphor-Atom hat und die vierbindige einen doppelt gebundenen Sauerstoff zum Phosphor (P=O) aufweist. Das Tautomeriegleichgewicht liegt dabei ganz auf der Seite der Form mit dem doppelt gebundenen Sauerstoff.

Gemäß A. F. Holleman, E. Wiberg: Lehrbuch der Anorganischen Chemie. 101. Auflage. Walter de Gruyter, Berlin/New York 1995, ISBN 3-11-012641-9, S. 764 sollen die Begriffe "Phosphorige Säure" bzw. "Phosphite" nur für die dreibindigen Formen verwendet werden.

Auch in der heutigen Literatur werden die Begriffe "Phosphorige Säure" bzw. "Phosphite" auch für die vierbindigen Formen mit doppelt gebundenem Sauerstoff zum Phosphor verwendet, so dass die Begriffe Phosphonsäure und Phosphorige Säure bzw. Phosphonate und Phosphite synonym zueinander verwendet werden.

Bevorzugte Komponenten C) sind aufgebaut aus

[Al₂(HPO₃)₃·x (H₂O)_{q} (Formel I)

mit q = 0 bis 4
oder

Al₂Mₐ(HPO₃)_{b}(OH)_{c} x (H₂O)_{d} (Formel II)

mit
M Alkalimetallionen
a = 0,01 bis 1,5
b = 2,63 bis 3,5
c = 0 bis 2
d = 0 bis 4
oder

   Al₂(HPO₃)ₑ(H₂PO₃)_{f} x (H₂O)_{q} (Formel III)
mit
e = 2 bis 2,99
f = 2 bis 0,01
g = 0 bis 4
oder
Mischungen aus Aluminiumphosphiten und Aluminiumoxid des Typs Al₂(HPO₃)₃ x 0,1 bis 30

   Al₂O₃ x 0 bis 50 H₂O (Formel IV)

   oder

   primäres Aluminiumphosphonat [Al(H₂PO₃)₃] (Formel V)

   oder

   basisches Aluminiumphosphonat [Al(OH)H₂PO₃) x·2H₂O] (Formel VI)

   oder deren Mischungen.

Bezorzugte Formmassen enthalten als Komponente C) Verbindungen der Formel II, in denen M Natrium und/oder Kalium bedeutet.

Bevorzugte Verbindungen der Formel I sind

sekundäres Aluminiumphosphonat [Al₂(HPO₃)₃] (Formel la)

oder

Aluminiumphosphonattetrahydrat [Al₂(HPO₃)₃·4H₂O] (Formel Ib)

oder deren Mischungen.

Bevorzugte Verbindungen der Formel IV sind aus Mischungen aus Aluminiumphosphiten und Aluminiumoxid des Typs Al₂(HPO₃)₃ x 0,2 bis 20 Al₂O₃ x 0 bis 50 H₂O (Formel IV) und ganz besonders bevorzugt Al₂(HPO₃)₃ x 1 bis 3 Al₂O₃ x 0 bis 50 H₂O aufgebaut.

Bevorzugte Verbindungen C) der Formel II sind solche, in denen a 0,15 bis 0,4 und b 2,80 bis 3 und c 0,01 bis 0,1 bedeutet.

Weiterhin bevorzugte Komponenten C) sind aus Verbindungen der Formel III aufgebaut, in welcher e 2,834 bis 2,99 und f 0,332 bis 0,03 und g 0,01 bis 0,1 bedeutet.

Insbesondere bevorzugte Verbindungen C) sind solche der Formel II oder III, wobei a, b und c sowie e und f nur solche Zahlen annehmen können, dass das entsprechende Aluminiumsalz der Phosphonsäure als Ganzes ungeladen ist.

Besonders bevorzugt sind Aluminiumphosphite mit den CAS-Nummern 15099-32-8, 119103-85-4, 220689-59-8, 56287-23-1, 156024-71-4 (sekundäres Aluminiumphosphonattetrahydrat), 71449-76-8 (sekundäres Aluminiumphosphonat) und 15099-32-8

Die beschriebenen Aluminiumsalze der Phosphonsäure können dabei einzeln oder im Gemisch eingesetzt werden.

Bevorzugt haben die Aluminiumphosphite Teilchengrößen von 0,2 bis 100 µm, deren Teilchengrößenverteilung durch übliche Analysenmethoden der Laserbeugung bestimmt werden können.

Die Herstellung der bevorzugten Aluminiumphosphite erfolgt üblicherweise durch Umsetzung einer Aluminiumquelle mit einer Phosphorquelle in einem Lösungsmittel bei 20 bis 200 °C während einer Zeitspanne von bis zu 4 Tagen. Aluminiumquelle und Phosphorquelle werden dazu vermischt, unter hydrothermalen Bedingungen oder am Rückfluss erhitzt, abfiltriert, gewaschen und getrocknet. Das bevorzugte Lösungsmittel ist hierbei Wasser.

Die Herstellung der erfindungsgemäß als Komponente C) eingesetzten Aluminiumsalze der Phosphonsäure können beispielsweise der WO 2013/083247 entnommen werden.

Als faser- oder teilchenförmige Füllstoffe D) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quartz, Glimmer, Bariumsulfat und Feldspat genannt, die in Mengen 0 bis 55, bevorzugt von 1 bis 50 Gew.-%, insbesondere 5 bis 40 Gew.-% eingesetzt werden können.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 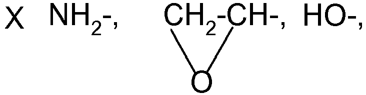
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf D) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide, prezipitierter Kalzit, genannt sowie zusätzlich plättchen- oder nadelförmige Nanofüllstoffe bevorzugt in Mengen zwischen 0,1 und 10 %. Bevorzugt werden hierfür Mica, Böhmit, Bentonit, Montmorillonit, Vermicullit, Zinkoxid in Nadelform und Hektorit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente E) können die Formmassen in Mengen von 0 bis 30 bevorzugt 0 bis 25 Gew-% weiterer Zusatzstoffe enthalten.

Hierbei kommen in Mengen von 1 bis 15, bevorzugt 1 bis 10, insbesondere 1 bis 8 Gew.-% kautschukelastische Polymerisate in Betracht (oft auch als Schlagzähmodifier, Elastomere oder Kautschuke bezeichnet).

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall "Toughened Plastics" (Applied Science Publishers, London, 1977) beschrieben.

Im Folgenden werden einige bevorzugte Arten solcher Elastomerer vorgestellt:
Bevorzugte Komponente E) sind Schlagzähmodifier auf Basis von Ethylencopolymeren, welche aufgebaut sind aus:
E₁) 40 bis 98 Gew.-%, bevorzugt 50 bis 94,5 Gew.-% Ethylen
E₂) 2 bis 40 Gew.-%, bevorzugt 5 bis 40 Gew.-% eines (Meth)Acrylates mit 1 bis 18 C-Atomen, oder/und
E₃) 0 bis 20 Gew.-%, bevorzugt 0,05 bis 10 Gew.-% funktioneller Monomerer, ausgewählt aus der Gruppe der ethylenisch ungesättigten Mono- oder Dicarbonsäuren oder der Carbonsäureanhydride oder Epoxidgruppen oder deren Mischungen, wobei die Summe der Gewichtsprozente E₁) bis E₃) 100 % ergibt.
   oder
ein Ethylen-(Meth)acrylsäure Copolymer, welches bis zu 72 % mit Zink neutralisiert ist.

Besonders bevorzugt sind Ethylencopolymere, aufgebaut aus:
E₁) 50 bis 69,9 Gew.-% Ethylen
E₂) 30 bis 40 Gew.-% eines (Meth)Acrylates mit 1 bis 18 C-Atomen
E₃) 0,1 bis 10 Gew.-% funktioneller Monomerer gemäß Anspruch 1,
wobei die Summe der Gewichtsprozente E₁) bis E₃) 100 % ergibt.

Der Anteil der funktionellen Gruppen E₃) beträgt 0,05 bis 5, vorzugsweise 0,2 bis 4 und insbesondere 0,3 bis 3,5 Gew.-%, bezogen auf 100 Gew.-% E).

Besonders bevorzugte Komponenten E₃) sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure D₂, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl, Octyl- und Decylacrylate bzw. die entsprechenden Ester der Methacrylsäure. Von diesen werden n-Butylacrylat und 2-Ethylhexylacrylat besonders bevorzugt.

Zusätzlich zu den Estern können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.

Als weitere Beispiele für Monomere E₃) seien Acrylsäure, Methacrylsäure, tertiäre Alkylester dieser Säuren, insbesondere Butylacrylat und Dicarbonsäuren wie Maleinsäure und Fumarsäure oder Anhydride dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im Allgemeinen im Bereich von 1 bis 80 g/10 min (gemessen bei 190°C und 2,16 kg Belastung).

Das Molekulargewicht dieser Ethylen-Copolymeren liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Bevorzugt eingesetzte Handelsprodukte sind Fusabond^{®} A 560, Lucalen^{®} A 2910, Lucalen^{®} A 3110, Nucrel 3990, Nucrel 925, Lotader AX9800, Igetabond FS 7M.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. Blackley in der Monographie " Emulsion Polymerization" beschrieben wird. Die verwendbaren Emulgatoren und Katalysatoren sind an sich bekannt.

Insbesondere bevorzugt sind Copolymerisate, welche keine Einheiten E₂) enthalten, jedoch die Säurekomponente E₃) mit Zn neutralisiert wurde. Hierbei sind Ethylen-(Meth)acrylsäure-Copolymere bevorzugt, welche bis zu 72 % mit Zink neutralisiert wurden (im Handel als Surlyn^{®} 9520 der Firma Dupont erhältlich).

Selbstverständlich können auch Mischungen der vorstehend aufgeführten Kautschuktypen eingesetzt werden.

Weitere Zusatzstoffe E) können in Mengen bis zu 30, bevorzugt bis zu 20 Gew.-% enthalten sein.

Als Komponente E) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4, enthalten.

Als Salze des einwertigen Kupfers kommen vorzugsweise Cu-(I)-Komplexe mit PPh₃, Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole E) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 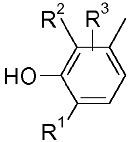 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 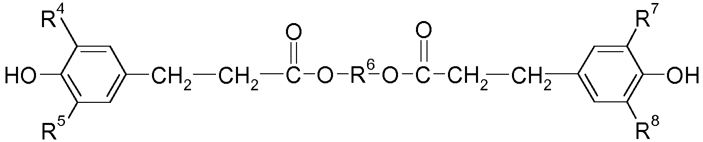 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind 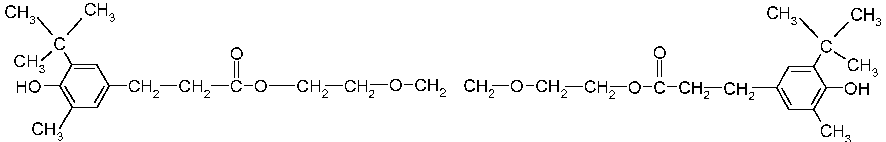 (Irganox^{®} 245 der Firma BASF SE) 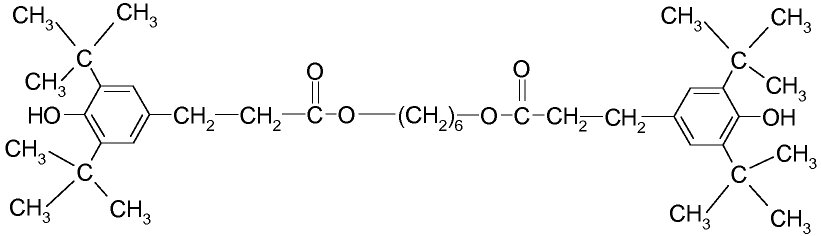 (Irganox^{®} 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlor-benzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox^{®} 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox^{®} 1098) und das vorstehend beschriebene Irganox^{®} 245 der Firma BASF SE, das besonders gut geeignet ist.

Die Antioxidantien E), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente E) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit Metall. Eisen und FeCl₃ (Name von lateinischem niger = schwarz).

Die Komponente E) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine bessere Flammwidrigkeit , insbesondere Glüdrahttest und bessere Mechanik aus.

Diese eignen sich daher zur Herstellung von Fasern, Folien und Formkörpern jeglicher Art. Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informations-technologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

### Beispiele

Es wurden folgende Komponenten verwendet:

### Komponente A1:

Polyamid 66 mit einer Viskositätszahl VZ von 150 ml/g, gemessen als 0.5 gew.-%ige Lösung in 96 gew.-%iger Schwefelsäure bei 25°C nach ISO 307 (Es wurde Ultramid^{®} A27 der BASF SE verwendet).

### Komponente B:

50%iges Konzentrat aus rotem Phosphor der mittleren Teilchengröße (d50) von 10 bis 30 µm in einem Olefinpolymerisat E1) aus:
59,8 Gew.% Ethylen, 35 Gew.% n-Butylacrylat, 4,5 Gew.% Acrylsäure und 0,7 Gew.% Maleinsäureanhydrid mit einem Schmelzindex MFI (190/2.16) von 10 g/10min.

Das Copolymerisat wurde durch Copolymerisation der Monomeren bei erhöhter Temperatur und erhöhtem Druck hergestellt.

### Komponente C:

Aluminiumsalzes der Phosphonsäure (hergestellt nach WO 2013/083247 A1, Beispiel 4) Aluminiumphosphit der Formel (II):
In einem 16 I-Hochdruckrührbehälter werden 2958 g Wasser vorgelegt, auf 155 °C erhitzt und gerührt. Anschließend werden während 30 min gleichzeitig 3362 g Aluminiumsulfat-Lösung und 2780 g Natriumphosphit-Lösung zudosiert. Die entstehende Suspension wird abgelassen und bei 80 °C filtriert, mit heißem Wasser gewaschen, redispergiert und nochmals gewaschen. Der Filterkuchen wird in einem Trockner bei 220 °C getrocknet. In 85% Ausbeute wird ein erfindungsgemäßes Alkali- Aluminium-Mischphosphit mit sehr hoher thermischer Stabilität erhalten.

Das Reaktionsprodukt enthält gemäß Atomspektroskopie 18.3% Al, 32.0% P, 0.3% S und 0.07% Na. Der Restfeuchtegehalt von 0.1 % Wasser wurde durch Titration nach Karl-Fischer ermittelt.

### Komponente C1V:

Aluminium-Diethylphosphinat (Exolit^{®} OP1230 ex Clariant Produkte GmbH).

### Komponente D:

Standard Schnittglasfaser für Polyamide, Länge = 4.5mm, Durchmesser = 10 µm

### Komponente E2:

In allen Beispielen jeweils
0,35 Gew.% Irganox ^{®} 1098 und
0,55 Gew.% handelsübliches Calciumstearat als Schmiermittel sowie
0,70 Gew.% handelsübliches Zinkoxid

### Komponente E3:

30%iges Konzentrat aus einem Gasruß mit einer spezifischen BET Oberfläche (gemessen nach DIN 66131) von 180 m²/g in Polyamid 6.

### Herstellung der Formmassen

Zum Nachweis der erfindungsmäß beschriebenen Verbesserungen wurden durch Compoundierung entsprechende Kunststoff-Formmassen angefertigt. Die einzelnen Komponenten wurden hierzu in einem Zweiwellenextruder ZSK 26 (Fa. Berstorff) bei einem Durchsatz von 20 kg/h und ca. 270°C bei flachem Temperaturprofil gemischt, als Strang ausgetragen, bis zur Granulierfähigkeit abgekühlt und granuliert.

Der Prüfkörper für die in Tabelle 1 aufgeführten Untersuchung wurden auf einer Spritzgießmaschine des Typs Arburg 420C bei einer Massetemperatur von ca. 270°C und einer Werkzeugtemperatur von ca. 80°C verspritzt.

Die Prüfkörper für die Spannungstests wurden nach ISO 527-2:/1993 und die Prüfkörper für die Schlagzähigkeitsmessungen nach ISO 179-2/1 eA hergestellt.

Die MVR Messungen wurden nach ISO 1133 durchgeführt.

Die Flammwidrigkeit der Formmassen wurde zum einen nach der Methode UL94-V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit GWFI (Glow-Wire-Flammability-Index) an Platten wurde nach IEC 60695-2-12 durchgeführt. Der GWFI ist eine generelle Eignungsprüfung für Kunststoffe im Kontakt mit spannungsführenden Teilen. Ermittelt wird die höchste Temperatur, in der in 3 aufeinander folgende Tests eine der folgenden Bedingungen erfüllt ist: (a) keine Entzündung der Probe oder (b) Nachbrennzeit oder Nachglühzeit ≤ 30 s nach Ende der Einwirkzeit des Glühdrahtes und keine Entzündung der Unterlage.

Die Summe der Anteile der Komponenten A) bis E) in Tabelle 1 ergänzen sich zu 100 Gew.-%.

**Tabelle 1**

| Komponenten (Gew.-%) | V1 #6842 (405694 67J0) | V2 #8048 | V3 #8179 | Bsp1 #5212 | Bsp2 #5074 | Bsp3 #2268 |
|---|---|---|---|---|---|---|
| A | 60.4 | 57.4 | 49.73 | 57.4 | 50.2 | 46.87 |
| B+E1 | 12 | | | 12 | 10.2 | 10.2 |
| E1 | | 6 | 6 | | | |
| D | 26 | 26 | 26 | 26 | 36 | 36 |
| C | | 9 | 3 | 3 | 2 | 2 |
| C1V | | | 13.67 | | | |
| E2 | 1.6 | 1.6 | 1.6 | 1.6 | 1.6 | 1.6 |
| E3 | | | | | | 3.33 |
| Analysenergebnisse | | | | | | |
| Viskositätszahl /[cm3/g] | 154 | 159 | 158 | 145 | - | - |
| E-Modul /[MPa] | 8325 | 8415 | 8190 | 8454 | 11154 | 11675 |
| Bruchspannung /[MPa] | 137 | 117 | 120 | 136 | 158 | 162 |
| Bruchdehnung /[%] | 3.5 | 3.2 | 3.0 | 3.4 | 3.1 | 2.9 |
| Charpy Schlagzähigkeit /[kJ/m2] | 69 | 57 | 57 | 70 | 78 | 74 |
| Charpy Kerbschlagzähigkeit /[kJ/m2] | 8.2 | 7.0 | 6.8 | 7.7 | - | - |
| MVR 275°C/5kg /[cm3/10 min] | 30 | 26 | 14 | 29 | 18 | 20 |
| UL94 / 0.8 mm | V-0 | n.c. | n.c. | V-0 | V-0 | V-0 |
| UL94 / 1.6 mm | V-0 | n.c. | n.c. | V-0 | V-0 | V-0 |
| GWFI960 /1.0 mm - Brand-zeiten an 3 Prüfkörpern /sec | Erfüllt 58/57/5 5 | Nicht erfüllt >60/>60 />60 | Nicht erfüllt >60/>60 />60 | Erfüllt 39/38/47 | Erfüllt 39/38/47 | Erfüllt 39/38/47 |

| | | | | | | |
|---|---|---|---|---|---|---|
| V1 bis V3: Vergleichsbeispiele Bsp 1 bis Bsp 3: erfindungsgemäße Beispiele | | | | | | |

Anhand der Daten von Tabelle 1 geht hervor, daß die erfindungsgemäße, synergistische Zusammensetzung gegenüber dem Stand der Technik - speziell bei dünnen Wandstärken - deutlich kürzere Brandzeiten im Glühdrahttest aufweist.

## Patentansprüche

1. Thermoplastische Formmassen, enthaltend
A) 10 bis 98,5 Gew.-% eines thermoplastischen Polyamides,
B) 1 bis 20 Gew.-% roter Phosphor,
C) 0,5 bis 15 Gew.-% eines Aluminiumsalzes der Phosphonsäure,
D) 0 bis 55 Gew.-% eines faser- oder teilchenförmigen Füllstoffes oder deren Mischungen,
E) 0 bis 30 Gew.-% weiterer Zusatzstoffe,
wobei die Summe der Gewichtsprozente A) bis E) 100 % ergibt.

2. Thermoplastische Formmassen nach Anspruch 1, enthaltend
A) 20 bis 97,5 Gew.-%
B) 1 bis 10 Gew.-%
C) 0,5 bis 15 Gew.-%
D) 1 bis 50 Gew.-%
E) 0 bis 25 Gew.-%,
wobei die Summe der Gewichtsprozente A) bis E) 100 % ergibt.

3. Thermoplastische Formmassen nach den Ansprüchen 1 oder 2, in denen die Komponente C) aufgebaut ist aus
[Al₂(HPO₃)₃·x (H₂O)_{q} (Formel I)
mit q = 0 bis 4
oder
Al₂Mₐ(HPO₃)_{b}(OH)_{c} x (H₂O)_{d} (Formel II)
mit
M Alkalimetallionen
a = 0,01 bis 1,5
b = 2,63 bis 3,5
c = 0 bis 2
d = 0 bis 4
oder
Al₂(HPO₃)ₑ(H₂PO₃)_{f} x (H₂O)_{q} (Formel III)
mit
e = 2 bis 2,99
f = 2 bis 0,01
g = 0 bis 4
oder
Mischungen aus Aluminiumphosphiten und Aluminiumoxid des Typs Al₂(HPO₃)₃ x 0,1 bis
30 Al₂O₃ x 0 bis 50 H₂O (Formel IV)
oder
primäres Aluminiumphosphonat [Al(H₂PO₃)₃] (Formel V)
oder
basisches Aluminiumphosphonat [Al(OH)H₂PO₃) x·2H₂O] (Formel VI)
oder deren Mischungen.

4. Thermoplastische Formmassen nach den Ansprüchen 1 bis 3, enthaltend als Komponente C) Verbindungen der Formel II, in denen M Natrium und/oder Kalium bedeutet.

5. Thermoplastische Formmassen nach den Ansprüchen 1 bis 4, in denen die Komponente C) aus
sekundärem Aluminiumphosphonat [Al₂(HPO₃)₃] (Formel la)
oder
Aluminiumphosphonattetrahydrat [Al₂(HPO₃)₃·4H₂O] (Formel Ib)
oder deren Mischungen aufgebaut ist.

6. Thermoplastische Formmassen nach den Ansprüchen 1 bis 5, in denen die Komponente C) aus Mischungen aus Aluminiumphosphiten und Aluminiumoxid des Typs Al₂(HPO₃)₃ x 0,2 bis 20 Al₂O₃ * 0 bis 50 H₂O (Formel IV) aufgebaut ist.

7. Thermoplastische Formmassen nach den Ansprüchen 1 bis 6, in denen die Komponente C) aufgebaut ist Verbindungen der Formel II, in welcher a 0,15 bis 0,4 und b 2,80 bis 3 und c 0,01 bis 0,1 bedeutet.

8. Thermoplastische Formmassen nach den Ansprüchen 1 bis 7, in denen die Komponente C) aus Verbindungen der Formel III aufgebaut ist, in welcher e 2,834 bis 2,99 und f 0,332 bis 0,03 und g 0,01 bis 0,1 bedeutet.

9. Verwendung der thermoplastischen Formmassen gemäß den Ansprüchen 1 bis 8 zur Herstellung von Fasern, Folien und Formkörpern.

10. Fasern, Folien und Formkörper erhältlich aus den thermoplastischen Formmassen gemäß den Ansprüchen 1 bis 8.

## Claims

1. A thermoplastic molding material comprising
A) 10 to 98.5 wt% of a thermoplastic polyamide,
B) 1 to 20 wt% of red phosphorus,
C) 0.5 to 15 wt% of an aluminum salt of phosphonic acid,
D) 0 to 55 wt% of a fibrous or particulate filler or mixtures thereof,
E) 0 to 30 wt% of further additives,
wherein the weight percentages A) to E) sum to 100%.

2. The thermoplastic molding material according to claim 1 comprising
A) 20 to 97.5 wt%
B) 1 to 10 wt%
C) 0.5 to 15 wt%
D) 1 to 50 wt%
E) 0 to 25 wt%,
wherein the weight percentages A) to E) sum to 100%.

3. The thermoplastic molding material according to claims 1 and 2, in which the component C) is constructed from
[Al₂(HPO₃)₃·x (H₂O)_{q} (formula I)
where q = 0 to 4
or
Al₂Mₐ(HPO₃)_{b}(OH)_{c} x (H₂O)_{d} (formula II)
where
M represents alkali metal ions
a = 0.01 to 1.5
b = 2.63 to 3.5
c = 0 to 2
d = 0 to 4
or
Al₂(HPO₃)ₑ(H₂PO₃)_{f} x (H₂O)₉ (formula III)
where
e = 2 to 2.99
f = 2 to 0.01
g = 0 to 4
or
mixtures of aluminum phosphites and aluminum oxide of the type Al₂(HPO₃)₃ x 0.1 to 30 Al₂O₃ x 0 to 50 H₂O (formula IV)
or
primary aluminum phosphonate [Al(H₂PO₃)₃] (formula V)
or
basic aluminum phosphonate [Al(OH)H₂PO₃) x·2H₂O] (formula VI)
or mixtures thereof.

4. The thermoplastic molding material according to claims 1 to 3, comprising as component C) compounds of formula II in which M represents sodium and/or potassium.

5. The thermoplastic molding material according to claims 1 to 4, in which the component C) is constructed from
secondary aluminum phosphonate [Al₂(HPO₃)₃] (formula Ia)
or
aluminum phosphonate tetrahydrate [Al₂(HPO₃)₃·4H₂O] (formula Ib)
or mixtures thereof.

6. The thermoplastic molding material according to claims 1 to 5, in which the component C) is constructed from mixtures of aluminum phosphites and aluminum oxide of the type Al₂(HPO₃)₃ x 0.2 to 20 Al₂O₃ * 0 to 50 H₂O (formula IV).

7. The thermoplastic molding material according to claims 1 to 6, in which the component C) is constructed from compounds of formula II in which a is 0.15 to 0.4 and b is 2.80 to 3 and c is 0.01 to 0.1.

8. The thermoplastic molding material according to claims 1 to 7, in which the component C) is constructed from compounds of formula III in which e is 2.834 to 2.99 and f is 0.332 to 0.03 and g is 0.01 to 0.1.

9. The use of the thermoplastic molding material according to claims 1 to 8 for the production of fibers, films and moldings.

10. A fiber, film or molding obtainable from the thermoplastic molding material according to claims 1 to 8.

## Revendications

1. Masses de moulage thermoplastiques contenant
A) 10 à 98,5 % en poids d'un polyamide thermoplastique,
B) 1 à 20 % en poids de phosphore rouge,
C) 0,5 à 15 % en poids d'un sel d'aluminium de l'acide phosphonique,
D) 0 à 55 % en poids d'une charge fibreuse ou particulaire ou de leurs mélanges,
E) 0 à 30% en poids d'autres additifs,
la somme des pourcentages en poids A) à E) valant 100 % en poids.

2. Masses de moulage thermoplastiques selon la revendication 1, contenant
A) 20 à 97,5 % en poids
B) 1 à 10 % en poids
C) 0,5 à 15 % en poids
D) 1 à 50 % en poids
E) 0 à 25 % en poids,
la somme des pourcentages en poids A) à E) valant 100 % en poids.

3. Masses de moulage thermoplastiques selon les revendications 1 ou 2, dans lesquelles le composant C) est formé par
[Al₂(HPO₃)₃·x (H₂O)_{q} (Formule I)
avec q = 0 à 4
ou
Al₂Mₐ(HPO₃)_{b}(OH)_{c} x (H₂O)_{d} (Formule II)
dans laquelle
M ions de métaux alcalins
a = 0,01 à 1,5
b = 2,63 à 3,5
c = 0 à 2
d = 0 à 4
ou
Al₂(HPO₃)ₑ (H₂PO₃)_{f} x (H₂O)_{g} (Formule III)
dans laquelle
e = 2 à 2,99
f = 2 à 0,01
g = 0 à 4
ou
des mélanges de phosphites d'aluminium et d'oxyde d'aluminium du type Al₂(HPO₃)₃ x 0,1 à 30 Al₂O₃ x 0 à 50 H₂O (Formule IV)
ou
du phosphonate d'aluminium primaire [Al(H₂PO₃)₃] (Formule V)
ou
du phosphonate d'aluminium basique [Al(OH)H₂PO₃) x·2H₂O] (Formule VI)
ou leurs mélanges.

4. Masses de moulage thermoplastiques selon les revendications 1 à 3, contenant en tant que composant C) des composés de formule II dans laquelle M signifie le sodium et/ou le potassium.

5. Masses de moulage thermoplastiques selon les revendications 1 ou 4, dans lesquelles le composant C) est formé par
du phosphonate d'aluminium secondaire [Al₂(HPO₃)₃] (Formule Ia)
ou
du phosphonate d'aluminium tétrahydraté [Al₂(HPO₃)₃·4H₂O] (Formule Ib)
ou leurs mélanges.

6. Masses de moulage thermoplastiques selon les revendications 1 ou 5, dans lesquelles le composant C) est formé par des mélanges de phosphites d'aluminium et d'oxyde d'aluminium de type Al₂(HPO₃)₃ x 0,2 à 20 Al₂O₃ * 0 à 50 H₂O (Formule IV).

7. Masses de moulage thermoplastiques selon les revendications 1 à 6, dans lesquelles le composant C) est formé par des composés de formule II, dans laquelle a vaut de 0,15 à 0,4 et b vaut de 2,80 à 3 et c vaut de 0,01 à 0,1.

8. Masses de moulage thermoplastiques selon les revendications 1 à 7, dans lesquelles le composant C) est formé par des composés de formule III, dans laquelle e vaut de 2,834 à 2,99 et f vaut de 0,332 à 0,03 et g vaut de 0,01 à 0,1.

9. Utilisation des masses de moulage thermoplastiques selon les revendications 1 à 8 pour la fabrication de fibres, de feuilles et de corps moulés.

10. Fibres, feuilles et corps moulés pouvant être obtenus à partir des masses de moulage thermoplastiques selon les revendications 1 à 8.
